# EUROPÄISCHE PATENTSCHRIFT

(11) **EP 3 380 391 B1**
(45) Veröffentlichungstag und Bekanntmachung des Hinweises auf die Patenterteilung: **09.06.2021**
(21) Anmeldenummer: 16760058.4
(22) Anmeldetag: 01.09.2016
(51) Int. Cl.: B62D 15/02, G01C 11/04, G01C 21/36

(54) **SYSTEM ZUM EINPARKEN EINES FAHRZEUGS**
SYSTEM FOR PARKING A VEHICLE
SYSTÈME DE STATIONNEMENT D'UN VÉHICULE

(30) Priorität: 26.11.2015 DE 102015223471
(43) Veröffentlichungstag der Anmeldung: 03.10.2018
(73) Patentinhaber: Bayerische Motoren Werke Aktiengesellschaft, 80809 München (DE)
(72) Erfinder: MARCIAL-SIMON, Enrique, 97209 Veitshöchheim (DE)
(86) Internationale Anmeldenummer: PCT/EP2016/070576
(87) Internationale Veröffentlichungsnummer: WO 2017/088997

(56) Entgegenhaltungen:
- WO-A1-2011/150946
- DE-A1-102012 022 087
- DE-A1-102014 000 978
- DE-A1-102014 200 611
- JP-A- 2008 174 192
- US-A1- 2007 198 190
- US-A1- 2010 156 672

## Beschreibung

Die Erfindung betrifft ein System zur Einparken eines Fahrzeugs, insbesondere eines PKWs, unter Verwendung eines mobilen Endgeräts.

Das Manövrieren eines PKWs führt regelmäßig zu kleinen und größeren Schäden an PKW. Insbesondere der Einparkvorgang führt aufgrund seiner Komplexität immer wieder zu Blechschäden an dem parkenden PKW oder an angrenzenden Hindernissen. Dies kann zum einen daran liegen, dass der Fahrer aufgrund eingeschränkter Sichtverhältnisse die Umgebung des PKWs nicht vollständig erfassen kann oder an einer Unachtsamkeit des Fahrers, wobei dieser Hindernisse übersieht.

Es ist somit notwendig, den Fahrer beim Einparken zu entlasten, sowie sicherzustellen, dass sämtliche verfügbaren Umgebungsinformationen in den Parkvorgang einfließen.

Um den Fahrer beim Einparken zu entlasten, ist es bekannt, dass moderne PKW in der Lage sind, autonom in Parklücken zu parken und aus diesen herauszumanövrieren. Dieses setzt in der Regel voraus, dass der Fahrer des PKWs in dem PKW sitzt und an eine bestimmte Parklücke heranfährt. Hat das Fahrzeug die Parklücke erkannt, so wird dies dem Fahrer signalisiert und der Fahrer kann den Einparkvorgang initiieren.

Wenn der PKW die Parklücke nicht als eine Parklücke identifizieren kann, zum Beispiel, wenn die Sicht durch ein Hindernis, wie eine Säule oder eine Wand, gestört ist, so muss der Fahrer den PKW in eine Position manövrieren, in der die Parklücke erkannt wird. Dieses ist jedoch sehr umständlich.

Darüber hinaus kann es beim autonom ausgeführten Einparken vorkommen, dass weitere Hindernisse erst in einer späten Phase des Einparkens sichtbar werden, sodass der PKW seine Einparkstrategie anpassen muss, also in der Regel eine Vielzahl von Lenk- bzw. Vorwärts- und Rückwärtsbewegungen ausführen muss. Dieses kann zu einem deutlich längeren Einparken führen und im schlimmsten Fall kann der Einparkvorgang nicht fortgeführt werden.

Zur Erhöhung des Komforts des Fahrers beim Einparken beschreibt die DE 102004027869 A1, dass der Fahrer unter Verwendung eines mobilen Endgeräts das Fahrzeug dazu veranlassen kann, autonom in eine Parklücke einzuparken. Dabei kann der Fahrer das Fahrzeug bereits vor dem Einparkvorgang verlassen und dann über das mobile Endgerät den Einparkvorgang von außen Steuern.

Das in der DE 102004027869 A1 beschriebene Verfahren bietet jedoch keine Möglichkeit, dass der Fahrer des PKWs das Einparken weiter spezifizieren kann. So wird der mögliche Wunsch des Fahrers, den PKW vorwärts oder rückwärts einparken zu lassen, nicht adressiert. Ferner kann der Fahrer den Wunsch haben, bei Vorliegen einer Vielzahl von gleichwertigen Parklücken, eine spezielle Parklücke auszuwählen.

Auch adressiert die DE 102004027869 A1 nicht, dass die im Fahrzeug verbaute Bordsensorik in einer Vielzahl von Fällen nicht ausreicht, um ein sicheres Einparken zu ermöglichen. So ist es denkbar, dass das Fahrzeug, wie oben ausgeführt, von seinem aktuellen Standpunkt aus nicht in der Lage ist, eine bestimmte Region in seiner Umgebung als Parklücke zu bestimmen, da die Sicht des Fahrzeugs durch Hindernisse blockiert sein kann.

Aus der DE 10 2014 200611 A1 ist ein Verfahren zur Durchführung eines autonomen Parkvorgangs bekannt. Dabei kann der Fahrer eines Fahrzeugs vor dem Parkvorgang ein Foto mit einem Handy von einer Parklücke aufnehmen. Die Aufnahme der Parklücke wird anschließend an das Fahrzeug übertragen. Zur Unterstützung der Auswahl einer Parklücke wird dem Fahrer auf dem Display des mobilen Endgeräts eine Art Fadenkreuz zur Auswahl eines Bereichs als Parklücke angezeigt. Die DE 10 2014 200611 A1 ist als nächstliegender Stand der Technik nach dem Oberbegriff der Ansprüche 1 und 7 zu sehen.

Ausgehend von dem genannten Stand der Technik ist es Aufgabe der vorliegenden Erfindung, ein System zum Einparken eines Fahrzeugs bereitzustellen, welches ein verbessertes (autonomes) Einparken eines PKW ermöglicht. Des Weiteren soll das System so ausgestaltet sein, dass die Mensch-Maschine-Schnittstelle verbessert wird.

Diese Aufgabe wird durch ein System gemäß dem Anspruch 1, ein Verfahren gemäß dem Anspruch 7 und einem computerlesbaren Speichermedium gemäß Anspruch 11 gelöst.

Insbesondere wird die Aufgabe durch ein System zum Einparken eines Fahrzeugs, insbesondere eines PKW, gelöst, wobei das System umfasst:
- ein mobiles Endgerät, insbesondere ein Smartdevice, insbesondere ein Smartphone, ein Smartglass oder eine Smartwatch, umfassend:
   ∘ zumindest eine erste Bilderfassungseinrichtung zur Erfassung von ersten Bilddaten;
   ∘ eine erste Recheneinheit, die dazu ausgebildet ist:
      ▪ die ersten Bilddaten von der ersten Bilderfassungseinrichtung zu empfangen;
      ▪ auf Basis der ersten Bilddaten, Informationen, die eine Parkposition angeben, zu generieren;
   ∘ eine Übertragungseinrichtung zum Übertragen der Informationen;
- das Fahrzeug, umfassend:
   ∘ eine Empfangseinrichtung, die dazu ausgebildet ist, die Informationen zu empfangen;
   ∘ eine zweite Recheneinheit, die dazu ausgebildet ist, auf Basis der Informationen eine Einparkstrategie zu bestimmen, wobei
   das Fahrzeug eine Einparkvorrichtung umfasst, die dazu ausgebildet ist, unter Berücksichtigung der Einparkstrategie, das Fahrzeug an der Parkposition zu parken.

Ferner umfasst das Fahrzeug zumindest eine zweite Bilderfassungseinrichtung zur Erfassung von zweiten Bilddaten.

Das System ist dadurch gekennzeichnet, dass das mobile Endgerät einen Inertialsensor zur Abgabe von Inertialdaten umfasst, und die erste Recheneinheit dazu ausgebildet ist, auf Basis der Inertialdaten, die Lage und Ausrichtung des mobilen Endgeräts zu bestimmen, und wobei die zweite Recheneinheit dazu ausgebildet ist, auf Basis der zweiten Bilddaten und der Lage und Ausrichtung des mobilen Endgeräts eine relative Position des mobilen Endgeräts zu dem Fahrzeug zu bestimmen.

Ein besonderer Vorteil des beschriebenen Systems besteht darin, dass ein mobiles Endgerät, unabhängig vom Fahrzeug, Bilddaten erfasst, die dazu verwendet werden, Informationen zu generieren, die eine Parkposition angeben. Diese Informationen werden dem Fahrzeug nach einer Übertragung entsprechend bereitgestellt. Auf Basis dieser Informationen kann das Fahrzeug eine Einparkstrategie bestimmen, die verwendet wird, um das Fahrzeug an einer Parkposition zu parken. Das Fahrzeug ist also nicht allein auf seine eigene, in dem Fahrzeug eingebaute, Sensorik angewiesen. In Situationen, in denen das Fahrzeug eine Parklücke von seiner aktuellen Position nicht komplett "einsehen", d.h. mittels Lidar scanner, RGB Kameras, Radar-Systemen oder ähnlichen Sensoren erfassen kann, ist mit dem erfindungsgemäßen System trotzdem ein sicheres Einparken möglich. Des Weiteren ermöglicht das System, eine bereits auf dem Fahrzeug durchgeführte Erfassung einer Parklücke zu bestätigen. Somit können Beschädigungen am Fahrzeug, die auf eine unzureichende Erfassung einer Parklücke zurückzuführen sind, verhindert werden.

Ferner ermöglicht das erfindungsgemäße System eine durch den PKW ermittelte Einparkstrategie zu verbessern, da weitere Informationen bereitgestellt werden, die aufgrund der unterschiedlichen Positionen des PKWs und des mobilen Endgerätes nicht vom PKW ermittelt können.

Die Informationen, die eine Parkposition angeben, können in einer Ausführungsform eine Richtung und eine Distanz von der Parkposition relativ zu dem mobilen Endgerät umfassen.

Die Informationen können also in einer vektoriellen Darstellung vorliegen, wobei die Raumdimensionen die Dimensionen des Vektors bilden. Wenn die Information die Richtung und die Distanz von der Parkposition relativ zu dem mobilen Endgerät umfassen, ist es möglich, dass das Fahrzeug die Position des mobilen Endgeräts bestimmt, sofern das Fahrzeug selbst in der Lage ist, die Parkposition zu bestimmen. Des Weiteren, ist es auch erfindungsgemäß möglich, dass das Fahrzeug, basierend auf den Informationen, in eine Position fährt, von der es die durch die Informationen beschriebene Parkposition besser unter Verwendung der eingebauten Sensorik erfassen kann. Ferner kann die Parkposition mit Hilfe der Richtung und Distanz von der Parkposition relativ zu dem mobilen Endgerät genauer erfasst werden.

Darüber hinaus kann die erste Recheneinheit dazu ausgebildet sein, die relative Position und/oder Ausrichtung des Fahrzeugs zu dem mobilen Endgerät auf Basis der ersten Bilddaten zu bestimmen.

Das mobile Endgerät kann dazu ausgebildet sein, das Fahrzeug in den ersten Bilddaten zu erkennen. Da die Fahrzeuggeometrie bekannt ist, kann aufgrund der Größenverhältnisse in den ersten Bilddaten die Entfernung des mobilen Endgerätes relativ zu dem Fahrzeug sehr genau ermittelt werden. Darüber hinaus ist es auch möglich, aufgrund der bekannten Fahrzeuggeometrie die Ausrichtung des Fahrzeugs in den ersten Bilddaten zu bestimmen. Somit kann die relative Position des mobilen Endgerätes zu dem Fahrzeug bestimmt werden. Ferner kann dann die relative Position des Fahrzeugs zum mobilen Endgerät an das Fahrzeug übermittelt werden, wenn die relative Position des Fahrzeugs ein Teil der Informationen ist, die eine Parkposition angeben. Dieses ist Vorteilhaft, da die Ausmaße des Fahrzeugs in den ersten Bilddaten in Regel sehr groß sind. Somit können Kanten des Fahrzeugs gut erkannt werden. Ferner weisen Fahrzeuge meist eine einzige Farbe oder zumindest wenige Farben auf und können somit leicht vom Hintergrund unterschieden werden.

In einer weiteren Ausführungsform kann das mobile Endgerät einen Beschleunigungssensor umfassen, der dazu ausgebildet ist, eine Bewegung des mobilen Endgerätes zu detektieren und die Generierung der Informationen, die eine Parkposition angeben auch auf Basis der Bewegung des mobilen Endgerätes durchzuführen.

Wenn das mobile Endgerät einen Beschleunigungssensor umfasst, dann ist es mögliche, eine Bewegung des mobilen Endgerätes zu detektieren. Insbesondere ist es dadurch möglich, einen Gehvorgang des Benutzers des mobilen Endgerätes zu detektieren. Das Gehen kann z.B. unter Verwendung eines Klassifikators, wie einer Stützvektormaschine (SVM), erkannt werden. Eine Bewegung des Benutzers, der das mobile Endgerät bedient kann also bei der Generierung der Informationen, die eine Parkposition angeben kompensiert werden.

Wenn das Fahrzeug eine zweite Bilderfassungseinrichtung umfasst, dann kann das Fahrzeug in den daraus generierten Bilddaten das mobile Endgerät mit Mitteln der Bildverarbeitung erkennen, und zunächst die Richtung von dem Fahrzeug zu dem mobilen Endgerät bestimmen. Unter Berücksichtigung, dass das mobile Endgerät von einem Fahrer üblicherweise in einer bestimmten Höhe, zum Beispiel 1,5 m, insbesondere 1,3 m gehalten wird, ist es ferner möglich, die Entfernung des Fahrzeugs zum mobilen Endgerät zu schätzen. Dieses könnte z.B. über eine Triangulation erfolgen, bei der unter Verwendung von bekannten Verfahren, wie z.B. RANSAC, die Bodenfläche erkannt wird, und dann eine vertikale, zur Bodenfläche orthogonal liegende Höhe zum mobilen Endgerät angenommen wird. Alternativ kann ein Lagesensor zur Bestimmung der Bodenfläche bestimmt werden.

In einer weiteren Ausführungsform kann sich das Fahrzeug bewegen, während das Fahrzeug das mobile Endgerät über die zweite Bilderfassungseinrichtung erfasst.

Durch Verfahren wie "Simultane Lokalisierung und Kartenerstellung" (SLAM) kann das Fahrzeug die Position des mobilen Endgeräts während einer Bewegung des Fahrzeugs bestimmen und/oder schätzen. Es können auch zusätzlich Fahrzeuginformationen, wie z.B. die momentane Geschwindigkeit oder der Lenkeinschlag, kombiniert werden um die Bestimmung der Position des mobilen Endgeräts weiter zu verbessern.

Des Weiteren kann die erste Recheneinheit, die zweite Recheneinheit und/oder eine dritte Recheneinheit eines Servers dazu ausgebildet sein, auf Basis der Informationen, die eine Parkposition angeben, eine Parklücke für das Fahrzeug zu erkennen.

Eine Parklücke kann durch eine Vielzahl von Merkmalen charakterisiert sein. So kann z.B. eine Parklücke, ein Bereich sein, der zwischen zwei Fahrzeugen liegt, der wiederum breit genug ist, um ein weiteres Fahrzeug aufzunehmen. Ferner kann eine Parklücke durch eine Markierung am Boden angezeigt sein. Eine weitere Möglichkeit besteht darin, dass eine Parklücke der Bereich zwischen zwei hintereinander stehenden Autos ist, sofern dieser genug Platz für das entsprechende Fahrzeug aufweist. Selbstverständlich sind noch verschiedene weitere Möglichkeiten von Merkmalen denkbar, die eine Parklücke charakterisieren.

Es gibt also eine Vielzahl an visuellen Merkmalen, die mit Hilfe von Verfahren der Bilderkennung bzw. Bildverarbeitung in Bilddaten erkannt werden können. Ein mögliches Verfahren, die Merkmale in Bilddaten zu erkennen ist z.B. skaleninvariante Merkmalstransformation (SIFT). Bei diesem Verfahren werden Merkmalsbeschreibungen verwendet, die in gewissen Grenzen invariant gegenüber Skalierung, Rotation und Translation sind und daher insbesondere im Bereich der Fahrzeugnavigation zum Auffinden von Objekten, wie z.B. Parklücken, geeignet sind.

Ein Vorteil besteht also darin, dass nicht nur eine Parkposition erkannt wird, sondern eine Parklücke selbst. Dies kann insbesondere wichtig sein, um dem Fahrer die möglichen Parkpositionen in einer ansprechenden Art und Weise anzuzeigen. Ferner kann eine Recheneinheit eines Servers die Berechnungen durchführen, bei denen die Parklücke erkannt wird. Dieses hat den Vorteil, dass die Ressourcen des PKW und/oder des mobilen Endgeräts nicht unnötig beansprucht werden. Weiter kann ein Server dezidierte bzw. spezielle Hardware aufweisen, die die Berechnung in besonders schneller Art und Weise durchführen kann.

Das mobile Endgerät kann ferner dazu ausgebildet sein, auf Basis von Fahrzeugdaten und den Informationen, die eine Parkposition anzeigen, eine Simulation des Einparkvorgangs bereitzustellen.

Es ist also möglich, dem Fahrer des Fahrzeugs bereits vor dem Einparkvorgang auf einem mobilen Endgerät, wie z.B. einem Smartphone, darzustellen, wie das Fahrzeug nach dem Einparkvorgang stehen würde. Dabei können insbesondere Fahrzeugdaten verwendet werden, die z.B. die Höhe, die Breite und/oder die Länge des Fahrzeugs umfassen können. Eine Simulation kann daher unter Verwendung von realitätsnahen Daten durchgeführt werden. Darüber hinaus ist es möglich, die Ergebnisse der Simulation dem Fahrer des Fahrzeugs bereitzustellen. Diese Bereitstellung kann in Form einer bewegten Animation erfolgen.

Es ist weiter möglich, dass die Informationen, die eine Parkposition angeben, die absolute Position der Parklücke umfassen.

Das mobile Endgerät kann z.B. einen GPS-Empfänger umfassen, womit das mobile Endgerät seine absolute Position bestimmen kann. Mit Hilfe dieser Daten ist es möglich, die absolute Position der Parkposition zu bestimmen. Dies hat den Vorteil, dass das Fahrzeug nicht weitere Berechnungen zur Ermittlung der absoluten Position der Parklücke durchführen muss. In dem Fall, in dem das Fahrzeug selbst einen GPS-Empfänger umfasst, also seine absolute Position feststellen kann, ist es dem Fahrzeug ohne weiteres möglich, autonom zu der Parklücke zu gelangen. In solch einem Fall werden also Ressourcen eingespart.

Wenn das mobile Endgerät einen Inertialsensor zur Abgabe von Inertialdaten umfasst, dann kann die Bestimmung der Parkposition, bzw. der Parklücke, verbessert werden. Ist die Lage und die Ausrichtung des mobilen Endgeräts bekannt, so kann die Entfernung von dem mobilen Endgerät zu der Parklücke bzw. Parkposition mit Mitteln der Bildverarbeitung, wie sie bereits oben beschrieben wurden, sehr genau bestimmt werden.

Die Aufgabe wird weiter durch ein Verfahren zum Einparken eines Fahrzeugs, insbesondere unter Verwendung der oben beschriebenen Systeme, gelöst, wobei das Verfahren die folgenden Schritte umfasst:
- Erfassen von ersten Bilddaten durch eine erste Bilderfassungseinrichtung eines mobilen Endgeräts;
- Erkennen einer Parkposition auf Basis der ersten Bilddaten;
- Übertragen von Informationen, die eine Parkposition angeben, an ein Fahrzeug;
- Bestimmen einer Einparkstrategie auf Basis der Informationen;
- Einparken des Fahrzeugs unter Verwendung der Einparkstrategie an der Parkposition;
- Erfassen von zweiten Bilddaten durch zumindest eine zweite Bilderfassungseinrichtung des Fahrzeugs.

Das Verfahren ist gekennzeichnet durch:
- Abgeben von Inertialdaten von einem Inertialssensor des mobilen Endgeräts;
- Bestimmen einer Lage und einer Ausrichtung des mobilen Endgeräts auf Basis der Inertialdaten;
- Bestimmen der relativen Position des mobilen Endgeräts auf Basis der zweiten Bilddaten und der Lage und Ausrichtung des mobilen Endgeräts.

In einer Ausführungsform können die Informationen, die die Parkposition angeben, eine Richtung und eine Distanz relativ zu dem mobilen Endgerät umfassen.

Ferner können die Informationen, die eine Parklücke angeben, die absolute Position der Parklücke umfassen.

In einer Ausführungsform kann das Verfahren weiter das Bestimmen einer relativen Position des Fahrzeugs zu dem mobilen Endgerät und/oder einer Ausrichtung des Fahrzeugs relativ zu dem mobilen Endgerät auf Basis der ersten Bilddaten umfassen, wobei die relative Position und/oder die relative Ausrichtung des Fahrzeugs Teil Informationen sind.

Es ergeben sich ähnliche Vorteile, wie sie für das oben beschriebene System angegeben wurden.

Die Aufgabe wird des Weiteren mit einem computerlesbaren Speichermedium gelöst, das Instruktionen enthält, die einen Prozessor dazu veranlassen, das beschriebene Verfahren zu implementieren, wenn die Instruktionen von dem Prozessor ausgeführt werden.

Weitere vorteilhafte Ausführungsformen ergeben sich anhand der Unteransprüche.

Nachfolgend wird die Erfindung mittels mehrerer Ausführungsbeispiele beschrieben, die anhand von Abbildungen erläutert werden. Hierbei zeigen:
Figur 1 ein Fahrzeug, umfassend eine Vielzahl von Bilderfassungseinrichtungen;
Figur 2 eine schematische Darstellung eines mobilen Endgeräts;
Figur 3 eine schematische Darstellung des Systems in einer ersten Ausführungsform;
Figur 4 eine schematische Darstellung des Systems in einer zweiten Ausführungsform;
Figur 5 eine schematische Darstellung des Systems in einer dritten Ausführungsform;
Figur 6 die geometrische Beziehung zwischen den Systemkomponenten und einer Parkposition;
Figur 7 eine exemplarische Einparksituation in einen ersten Zustand;
Figur 8 eine exemplarische Einparksituation in einem zweiten Zustand;
Figur 9 eine erste Darstellung eines Einparkvorgangs auf einem mobilen Endgerät;
Figur 10 eine zweite Darstellung eines Einparkvorgangs auf einem mobilen Endgerät.

In der nachfolgenden Beschreibung werden für gleiche und gleich wirkende Teile dieselben Bezugsziffern verwendet.

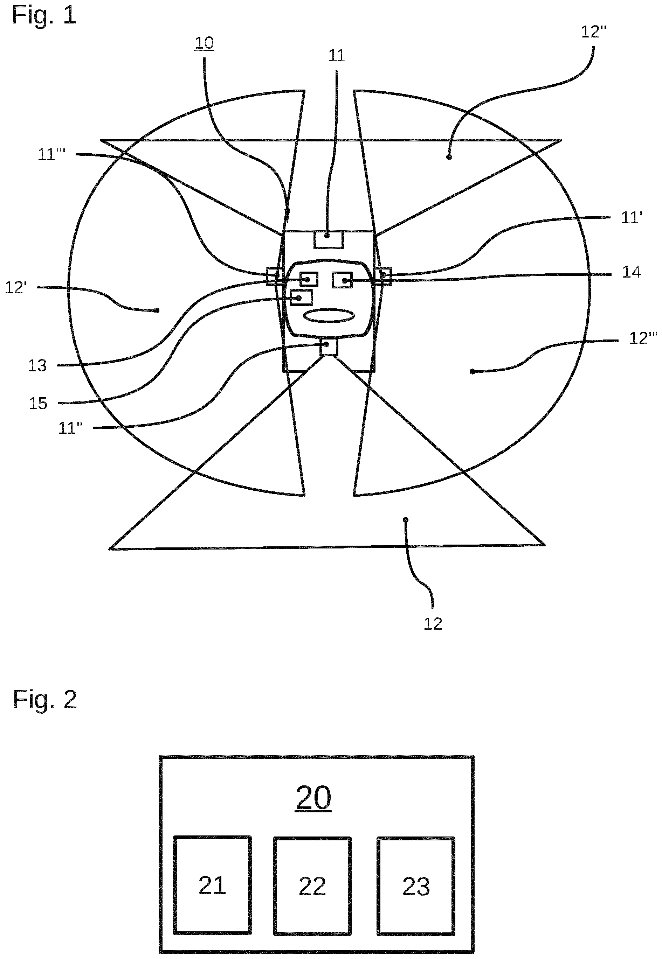

Figur 1 zeigt ein Fahrzeug 10, umfassend vier Bilderfassungseinrichtungen 11, 11', 11", 11"', eine Einparkvorrichtung 13, eine Empfangseinrichtung 14, und eine Recheneinheit 15. Die Bilderfassungseinrichtungen 11, 11', 11", 11'" sind in der ersten Ausführungsform des Fahrzeugs 10 RGB-Kameras zur Erfassung von Bildbereichen 12, 12', 12", 12"'. In weiteren Ausführungsformen, ist es durchaus denkbar, dass die Bilderfassungseinrichtungen 11, 11', 11", 11'" Radareinheiten, LIDAR-Scanner, Tiefenkameras, Ultraschallsensoren oder jegliche andere Form von Sensorik umfassen, die dazu in der Lage sind, die Umgebung des Fahrzeugs zu detektieren. Die Einparkvorrichtung 13 ist dazu ausgebildet, das Fahrzeug 10 autonom in einer erkannten Parklücke einzuparken. Hierzu erzeugt die Einparkvorrichtung 13 Steuersignale, die an eine nicht gezeigte Steuereinrichtung des Fahrzeugs 10 gesendet werden, so dass diese das Fahrzeug 10 veranlasst, entsprechende Lenk- und Beschleunigungs- bzw. Bremsvorgänge einzuleiten. Die Daten der Bilderfassungseinrichtung 11, 11', 11", 11'" des Fahrzeugs 10 werden an die Recheneinheit 15 zur Verarbeitung weitergeleitet. Die Recheneinheit 15 ist in der ersten Ausführungsform ein Bordcomputer. Die Empfangseinrichtung 14 ist dazu ausgebildet, Informationen 25, die eine Parklücke angeben, kabellos zu empfangen. Diese Informationen 25 werden von einem mobilen Endgerät 20 bereitgestellt.

Figur 2 zeigt ein solches mobiles Endgerät 20 in einer grob vereinfachten Darstellung. Das mobile Endgerät 20 umfasst eine Bilderfassungseinrichtung 21, eine Recheneinheit 22 und eine Übertragungseinrichtung 23. Die Bilderfassungseinrichtung 21 des mobilen Endgeräts 20 ist in einer ersten Ausführungsform des mobilen Endgeräts 20 eine RGB-Kamera. Das mobile Endgerät 20 ist in der ersten Ausführungsform ein Smartphone. Die erfassten Bilddaten 24 der Bilderfassungseinrichtung 21 des mobilen Endgeräts 20 werden zur Weiterverarbeitung an die Recheneinheit 22 des mobilen Endgeräts 20 weitergeleitet. Nach der Verarbeitung werden die Informationen 25 an die Übertragungseinrichtung 23 weitergegeben, die die Information 25 an das Fahrzeug 10 überträgt. Hierbei kann es sich einerseits um ein einmaliges Senden handeln, andererseits ist es auch möglich, dass die Übertragungseinrichtung kontinuierlich Daten an das Fahrzeug 10 sendet. Solch eine kontinuierliche Übertragung von Daten hat den Vorteil, dass das mobile Endgerät 20 selbst wenige Rechenoperationen durchführen muss. Die Recheneinheit 22 des mobilen Endgeräts 20 kann also sehr schwach dimensioniert sein, was der Akkulaufzeit des mobilen Endgeräts 20 zugutekommt. Es ist also so, dass die Recheneinheit 22 des mobilen Endgeräts 20 entweder die erfassten Daten der Bilderfassungseinrichtung 21 verarbeitet und/oder diese an die Übertragungseinrichtung 23 weiterleitet.

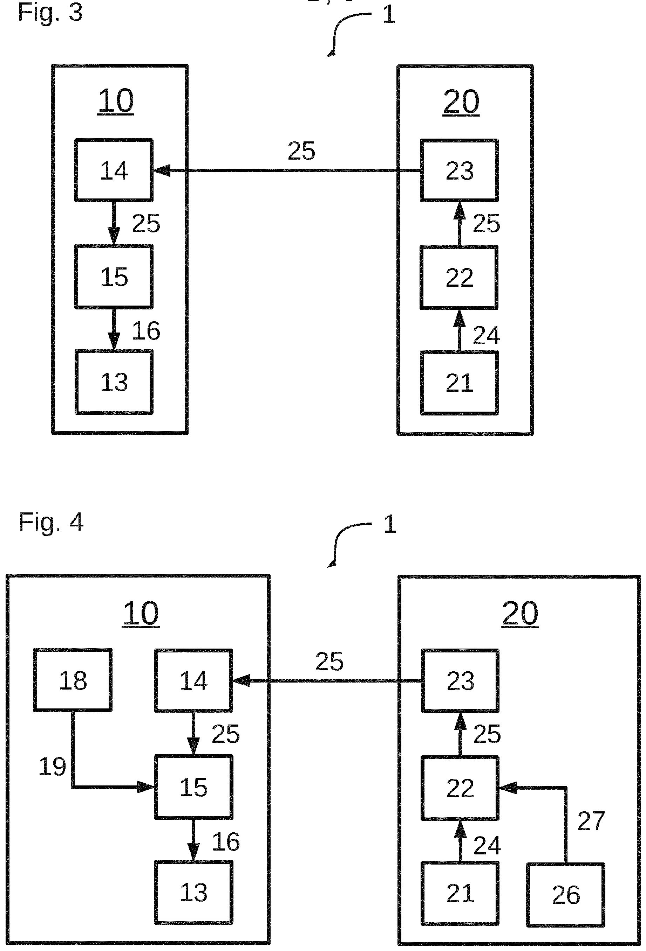

Figur 3 zeigt das System 1 zum Einparken eines Fahrzeugs 10 in einer ersten Ausführungsform. In der ersten Ausführungsform erfasst eine Bilderfassungseinrichtung 21 des mobilen Endgeräts 20 Bilddaten 24, die an eine Recheneinheit 22 des mobilen Endgeräts 20 gesendet werden. Aus den Bilddaten 24 ermittelt die Recheneinheit 22 Informationen 25, die eine Parkposition angeben. In der ersten Ausführungsform detektiert die Recheneinheit 22 eine Parklücke in den Bilddaten 24.

In dem Ausführungsbeispiel der Figur 3, verwendet die Recheneinheit 22 einen Harris Detektor zur Detektion von Merkmalen, die eine Parklücke bestimmen. Insbesondere kann der Harris Detektor verwendet werden, um die Linien auf einer Bodenfläche zu bestimmen, die vorher unter Verwendung des RANSAC Algorithmus extrahiert wurde. Durch die Anordnung der Merkmale in dem Bild kann ein in einer Trainingsphase trainiertes System eine Parkposition 2 identifizieren.

In weiteren Ausführungsformen kann die Parkposition 2 zusätzlich validiert werden. Das bedeutet, dass eine Überprüfung ausgeführt wird, ob das Fahrzeug 10 in der Parkposition genug Raum findet. Hierzu können insbesondere Meta-Daten über das Fahrzeug 10 verwendet werden, wie zum Beispiel die Höhe, die Breite und die Länge des Fahrzeugs 10. Basierend auf dem Ergebnis der Validierung, kann die Parkposition 2 weiter verwendet werden. Ist die Validierung negativ, so kann das Verfahren mit einer weiteren möglichen Position neu gestartet werden.

Die Informationen 25 werden nun an eine Übertragungseinrichtung 23 des mobilen Endgeräts 20 gesendet, um daraufhin von der Übertragungseinrichtung 23 an das Fahrzeug 10 gesendet zu werden. In der ersten Ausführungsform erfolgt diese Übertragung mit Hilfe von einem drahtlosen Netzwerk, z.B. nach dem IEEE 802.11 Standard. In anderen Ausführungsformen sind aber auch z.B. Bluetooth, Infrarot oder jede andere Form der drahtlosen Übertragung möglich. Selbstverständlich kann auch eine kabelgebundene Übertragung stattfinden.

Das Fahrzeug 10 empfängt die Informationen 25 mittels einer Empfangseinrichtung 14. Die Empfangseinrichtung 14 sendet die Informationen 25 daraufhin an eine Recheneinheit 15 des Fahrzeugs 10. Die Recheneinheit 15 verarbeitet die Informationen 25 weiter. Auf Basis der Informationen 25 ermittelt die Recheneinheit 15 eine Einparkstrategie 16 für das Fahrzeug 10.

Bei der Einparkstrategie 16 handelt es sich in der ersten Ausführungsform um einen Vektor V3, der von der Position des Fahrzeugs 10 zu der Parklücke 2 zeigt. In weiteren Ausführungsformen sind jedoch weitaus aufwendigere Einparkstrategien mögliche, wie z.B. eine Trajektorie, die durch einen Bewegungsplaner ermittelt wurde. Zu Ermittlung der Trajektorie kommen eine Vielzahl an bekannten Algorithmen in Frage, wie z.B. RRT ("Rapidly Exploring Random Tree").

Die Einparkstrategie 16 wird darauf folgend an die Einparkvorrichtung 13 übertragen. Die Einparkvorrichtung 13 kann dann das Fahrzeug 10 dazu veranlassen, in der Parklücke 2 zu parken.

Figur 4 zeigt das System 1 in einer zweiten Ausführungsform. In der zweiten Ausführungsform umfasst das mobile Endgerät ferner einen Inertialsensor 26. Der Inertialsensor 26 ist dazu ausgebildet, Inertialdaten 27 an die Recheneinheit 22 des mobilen Endgeräts 20 abzugeben. Die Inertialdaten 27 umfassen Daten, die die Lage und die Ausrichtung des mobilen Endgeräts 20 angeben. Zusammen mit den Bilddaten 24 der Bilderfassungseinrichtung 21 des mobilen Endgeräts 20, kann die Recheneinheit 22 Informationen 25 bereitstellen, die eine Parkposition 2 angeben, wobei diese Informationen 25 eine relative Entfernung und Richtung der Parkposition 2 von dem mobilen Endgerät 20 umfassen. Die Informationen 25 werden daraufhin von der Übertragungseinrichtung 23 des mobilen Endgeräts 20 an die Empfangseinrichtung 14 des Fahrzeugs 10 gesandt. Das Fahrzeug 10 umfasst in einer zweiten Ausführungsform eine Bilderfassungseinrichtung 18, die Bilddaten 19 an die Recheneinheit 15 des Fahrzeugs 10 sendet. Die Recheneinheit 15 erhält somit die Bilddaten 19 sowie die Informationen 25, die eine Parkposition 2 angeben. Die Recheneinheit 15 ist dazu ausgebildet, in den Bilddaten 19 das mobile Endgerät 20 zu erkennen. Es ist somit möglich, dass das Fahrzeug 10 die Position des mobilen Endgeräts 20 relativ zu dem Fahrzeug 10 ermittelt. Unter Verwendung der Informationen 25, die eine Position 2 angeben, an der das Fahrzeug 10 geparkt wird, ist es der Recheneinheit 15 möglich, die absolute Position der Parkposition 2 zu bestimmen. Solch eine Bestimmung kann mit einfachen Mitteln, wie einer Triangulation, erfolgen. Auf Basis der ermittelten relativen Position der Parkposition 2 von dem Fahrzeug 10, kann die Recheneinheit 15 eine Einparkstrategie 16 berechnen. In der zweiten Ausführungsform gibt die Einparkstrategie 16 an, wie das Fahrzeug 10 in die Parkposition 2 einparken soll. Dies umfasst eine Trajektorie, entlang derer das Fahrzeug 10 fahren soll. Die Einparkvorrichtung 13, die die Einparkstrategie 16 von der Recheneinheit 15 erhält, veranlasst das Fahrzeug 10 dazu, der Trajektorie, die in der Einparkstrategie 16 angegeben ist, zu folgen.

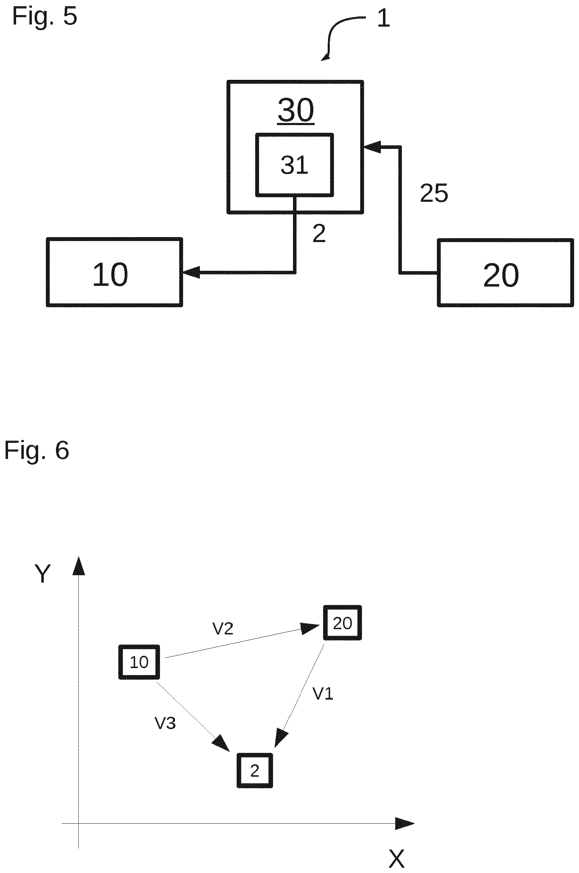

Figur 5 zeigt das System 1 in einer dritten Ausführungsform. In der dritten Ausführungsform sendet das mobile Endgerät 20 Informationen 25 an einen Server 30. Hierbei werden die Informationen 25 als kontinuierlicher Datenstream an den Server 30 gesandt. In der dritten Ausführungsform enthalten die Informationen 25 lediglich erfasste Bilddaten 24 des mobilen Endgeräts 20. Der Server 30 umfasst eine dritte Recheneinheit 31, die dazu ausgebildet ist, aus den Informationen 25 eine Parkposition 2 zu ermitteln. Der Server 30 ist in der dritten Ausführungsform ein Webserver, der über das Internet erreicht werden kann. Die Übertragung der Informationen 25 kann daher über einen Funkstandard, wie z.B. LTE oder UMTS, von dem mobilen Endgerät 20 aus erfolgen. Die Recheneinheit 31 des Servers 30 gibt die Parkposition 2 an das Fahrzeug 10 ab. Das Fahrzeug 10 kann somit, wie in den vorherigen Ausführungsformen, eine Einparkstrategie 16 berechnen.

Figur 6 zeigt die geometrische Beziehung des Fahrzeugs 10, des mobilen Endgeräts 20 und der Parkposition 2 in einer vereinfachten, zweidimensionalen Darstellung. Es ist somit ersichtlich, dass, wenn das mobile Endgerät 20 die Parkposition 2 erkannt hat, ein Vektor V1 berechnet werden kann, der die relative Position der Parkposition 2 zu dem mobilen Endgerät 20 angibt. In dem Fall, in dem das Fahrzeug 10 dazu ausgebildet ist, das mobile Endgerät 20 in einem erfassten Bildbereich 12, 12', 12", 12'" zu lokalisieren, kann das Fahrzeug 10 einen Vektor V2 bestimmen, der die relative Position des mobilen Endgeräts 20 zum Fahrzeug 10 angibt. Mit Hilfe von Vektoraddition kann somit ein Vektor V3 bestimmt werden, der die Parkposition 2 relativ zu der Position des Fahrzeugs 10 angibt. Unter Verwendung des Vektors V3 kann das Fahrzeug 10 die vorher beschriebene Einparkstrategie 16 ermitteln. Selbstverständlich ist es möglich, dass die relativen Positionen im dreidimensionalen Raum bereitgestellt werden. Damit können auch die Fälle erfasst werde, in denen sich verschiedene Parkpositionen nicht in einer Ebene befinden.

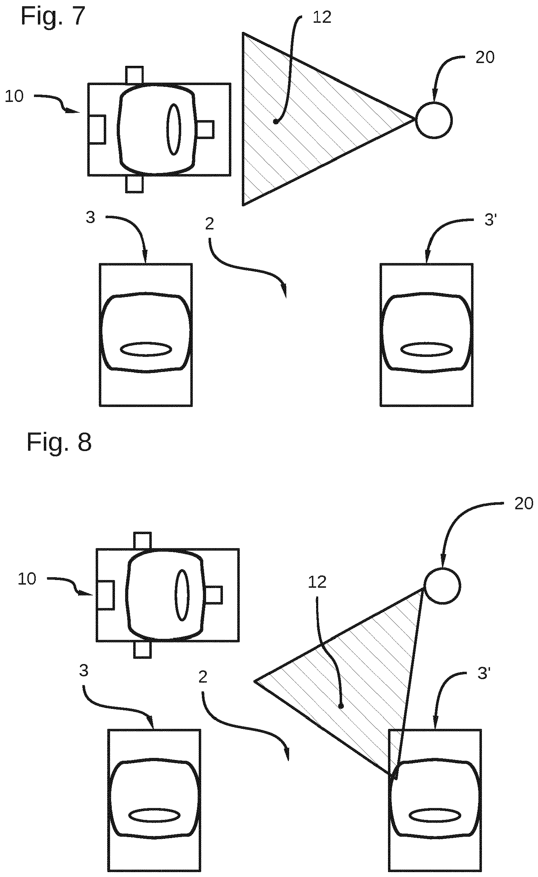

Die Figuren 7 und 8 zeigen ein exemplarisches Szenario, in dem ein Fahrer eines Fahrzeugs 10 einen Einparkvorgang des Fahrzeugs 10 initiiert. Figur 7 zeigt ein mobiles Endgerät 20, welches sich außerhalb eines Fahrzeugs 10 befindet. Zwei geparkte Fahrzeuge 3, 3' begrenzen eine Parklücke 2, in der das Fahrzeug 10 parken kann. Der Fahrer richtet das mobile Endgerät 20 zunächst auf das Fahrzeug 10, so dass dieses sich in einem erfassten Bildbereich 12 des mobilen Endgeräts 20 befindet. Das mobile Endgerät 20 kann daraufhin seine Position relativ zu dem Fahrzeug 10 bestimmen. Alternativ könnte das mobile Endgerät 20 auch dazu ausgebildet sein, eine relative Ausrichtung und/oder relative Position des Fahrzeugs 10 zu dem mobilen Endgerät 20 zu empfangen.

Im weiteren Verlauf kann der Fahrer mittels einer Schwenkbewegung das mobile Endgerät auf die Parkposition 2 richten. Dieses ist in Figur 8 gezeigt.

Das mobile Endgerät 20 erfasst die parkenden Autos 3, 3', die eine Parkposition 2 definieren, und kann somit ermitteln, dass es sich um eine mögliche Parklücke für das Fahrzeug 10 handelt. Ferner kann das mobile Endgerät 20 unter Verwendung der geschätzten Höhe des mobilen Endgerätes wie weiter oben erläutert die Entfernung und Richtung der Parkposition 2 bestimmen. Diese Informationen sendet das mobile Endgerät 20 im Folgenden an das Fahrzeug 10, wie bereits in Zusammenhang mit den anderen Figuren beschrieben.

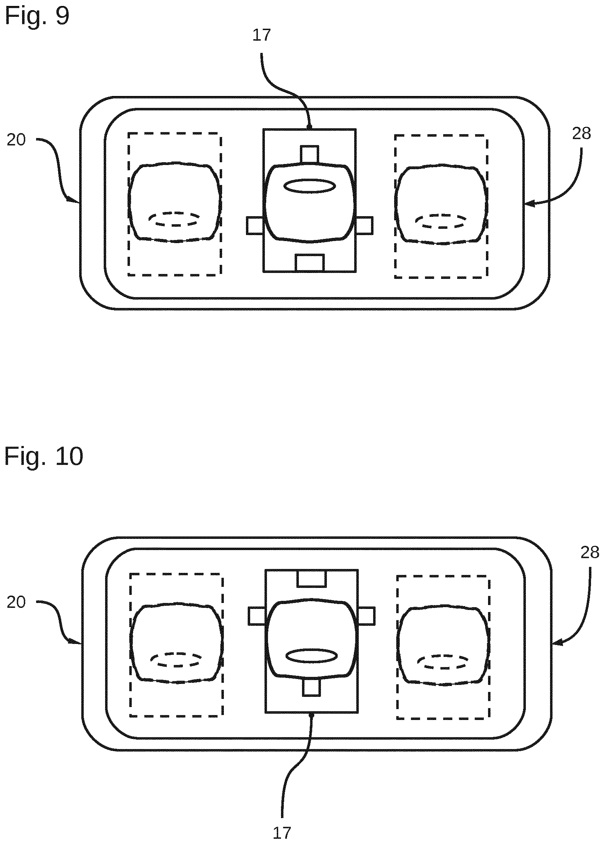

Vor dem eigentlichen Einparkvorgang des Fahrzeugs 10, kann das mobile Endgerät 20 dem Fahrer des Fahrzeugs 10 eine Simulation des geplanten Einparkvorgangs bereitstellen. Figur 9 zeigt ein mobiles Endgerät 20, das über ein Display 28 verfügt. In der in Figur 9 gezeigten Simulation ist das Fahrzeug 10 so eingeparkt, dass die Vorderseite 17 des Fahrzeugs 10, in der Darstellung der Figur 9, nach oben zeigt. Figur 10 zeigt dagegen eine Simulation, bei der die Vorderseite 17 des Fahrzeugs 10 nach unten zeigt. Der Fahrer des Fahrzeugs 10 hat die Möglichkeit, durch eine Eingabe auf dem mobilen Endgerät 20 zu bestimmen, auf welche Art und Weise das Fahrzeug 10 in die Parkposition 2 fahren soll. Hierzu kann der Fahrer Gesten auf einem Touchscreen ausführen, die eine Drehbewegung symbolisieren. Dies ist insbesondere von Vorteil, wenn der Fahrer den Kofferraum zugänglich haben möchte, um zum Beispiel Einkäufe zu verstauen.

In weiteren Ausführungsformen kann die Simulation per angereicherter Realität ("Augmented Reality") dem Fahrer auf einem Display und/oder einem Smart Glass dargestellt werden. Dabei wird die Simulation auf aufgenommene Bilder der Bilderfassungseinrichtung 21 des mobilen Endgerätes 20 überlagert. Somit wird dem Fahrer eine sehr einfach Darstellung der komplexen Einparksituation bereitgestellt. Die Einparksituation kann die Parkposition 2 und/oder die umgebenen Objekte des Fahrzeugs 10 bzw. einer Parklücke und/oder die Fahrzeuggeometrie und/oder Geometrie von Fahrzeugkomponenten umfassen. Die Simulation kann daher auch eine Simulation von weiteren Fahrzeugkomponenten umfassen, wie zum Beispiel die maximale Öffnungsstellung von Türen und Kofferraum. Der Fahrer kann somit erkennen, ob genügend Platz zum Öffnen der Türen verbleibt und dieses unmittelbar bei der Beurteilung der Parkposition 2 berücksichtigen.

Optional kann durch die bereitgestellte Simulation eine Überprüfung durch den Fahrer stattfinden. Stellt der Fahrer fest, dass die Parkposition 2 ungünstig gewählt oder gar falsch erkannt ist, hat er die Möglichkeit diese zu korrigieren. Insbesondere kann der Fahrer durch das Auswählen einer weiteren Parkposition 2 eine Korrektur ausführen. In einer weiteren Ausführungsform kann die Auswahl einer weiteren Parkposition 2 automatisch durch das Fahrzeug 10 und/oder durch das mobile Endgerät 20 und/oder einen externen Server 30 erfolgen.

Zusätzlich können die Eingaben des Fahrers an das Fahrzeug 10 übermittelt werden. Das Fahrzeug 10 kann die übertagen Eingaben darauf folgend bei der Ermittlung der Einparkstrategie 16 berücksichtigen.

Bei den beschriebenen Ausführungsformen ist es möglich, dass das mobile Endgerät entweder ein Smartphone ist, eine Smartwatch, die über eine Bilderfassungseinrichtung verfügt, oder auch ein Smartglass. insbesondere ein Smartglass hat den Vorteil, dass der Fahrer mit einem bloßen Blick auf die Parkposition 2 diese scannen kann, und das Fahrzeug 10 dazu veranlassen kann, in der Parkposition 2 zu parken. Somit ist eine sehr einfache Bedienung des Fahrzeugs 10 gegeben.

### Bezugszeichenliste

- 1: System
- 2: Parkposition
- 3, 3': parkendes Fahrzeug
- 10: Fahrzeug
- 11, 11', 11", 11'": zweite Bilderfassungseinrichtung
- 12, 12', 12", 12'": erfasster Bildbereich
- 13: Einparkvorrichtung
- 14: Empfangseinrichtung
- 15: zweite Recheneinheit
- 16: Einparkstrategie
- 17: Vorderseite
- 18: zweite Bilderfassungseinrichtung
- 19: zweite Bilddaten
- 20: Mobiles Endgerät
- 21: erste Bilderfassungseinrichtung
- 22: erste Recheneinheit
- 23: Übertragungseinrichtung
- 24: erste Bilddaten
- 25: Informationen
- 26: Inertialsensor
- 27: Inertialdaten
- 28: Display
- 30: Server
- 31: dritte Recheneinheit
- V1, V2, V3: Vektor

## Patentansprüche

1. System (1) zum Einparken eines Fahrzeugs (10), insbesondere eines PKW, umfassend:
- ein mobiles Endgerät (20), insbesondere ein Smart-Device, insbesondere ein Smartphone, ein Smart-Glass oder eine Smart-Watch, umfassend:
∘ zumindest eine erste Bilderfassungseinrichtung (21) zur Erfassung von ersten Bilddaten (24);
∘ eine erste Recheneinheit (22), die dazu ausgebildet ist:
▪ die ersten Bilddaten (24) von der ersten Bilderfassungseinrichtung (21) zu empfangen;
▪ auf Basis der ersten Bilddaten (24), Informationen (25), die eine Parkposition (2) angeben, zu generieren;
∘ eine Übertragungseinrichtung (23) zum Übertragen der Informationen (25);
- das Fahrzeug (10), umfassend:
∘ eine Empfangseinrichtung (14), die dazu ausgebildet ist, die Informationen (25) zu empfangen;
∘ eine zweite Recheneinheit (15), die dazu ausgebildet ist auf Basis der Informationen (25) eine Einparkstrategie (16) zu bestimmen,
∘ eine zweite Bilderfassungseinrichtung (18) zur Erfassung von zweiten Bilddaten (19);
∘ eine Einparkvorrichtung (13), die dazu ausgebildet ist, unter Berücksichtigung der Einparkstrategie (16), das Fahrzeug (10) an der Parkposition (2) zu parken,
**dadurch gekennzeichnet, dass**
das mobile Endgerät (20) einen Inertialsensor (26) zur Abgabe von Inertialdaten (27) umfasst, und die erste Recheneinheit (22) dazu ausgebildet ist, auf Basis der Inertialdaten (27), die Lage und Ausrichtung des mobilen Endgeräts (20) zu bestimmten, und wobei die zweite Recheneinheit (15) dazu ausgebildet ist, auf Basis der zweiten Bilddaten (19) und der Lage und Ausrichtung des mobilen Endgeräts (20) eine relative Position des mobilen Endgeräts (20) zu dem Fahrzeug (10) zu bestimmen.

2. System nach einem der vorhergehenden Ansprüche, **dadurch gekennzeichnet, dass**
die Informationen (25), eine Richtung und eine Distanz von der Parkposition (2) relativ zu dem mobilen Endgerät (20) umfassen.

3. System nach einem der vorhergehenden Ansprüche, **dadurch gekennzeichnet, dass** die erste Recheneinheit (22) dazu ausgebildet ist, eine relative Position und/oder Ausrichtung des Fahrzeugs (10) zu dem mobilen Endgerät (20) auf Basis der ersten Bilddaten (24) zu bestimmen.

4. System nach einem der vorhergehenden Ansprüche, **dadurch gekennzeichnet, dass**
die erste Recheneinheit (22), die zweite Recheneinheit (15) und/oder eine dritte Recheneinheit eines Servers dazu ausgebildet ist, auf Basis der Informationen (25), eine Parklücke für das Fahrzeug (10) zu erkennen.

5. System nach einem der vorhergehenden Ansprüche, **dadurch gekennzeichnet, dass**
das mobile Endgerät (20) dazu ausgebildet ist, auf Basis von Fahrzeugdaten und den Informationen (25), eine Simulation des Einparkvorganges bereitzustellen.

6. System nach einem der vorhergehenden Ansprüche, **dadurch gekennzeichnet, dass**
die Informationen (25), die absolute Position der Parklücke (2) umfassen.

7. Verfahren zum Einparken eines Fahrzeugs (10), umfassend:
- Erfassen von ersten Bilddaten (24) durch eine erste Bilderfassungseinrichtung (21) eines mobilen Endgerätes (20);
- Erkennen einer Parkposition (2) auf Basis der ersten Bilddaten (24);
- Übertragen von Informationen (25), die eine Parkposition angeben an ein Fahrzeug (10);
- Bestimmen einer Einparkstrategie (16) auf Basis der Informationen (25);
- Einparken des Fahrzeugs (10) unter Verwendung der Einparkstrategie (16) an der Parkposition (2),
- Erfassen von zweiten Bilddaten (19) durch zumindest eine zweite Bilderfassungseinrichtung (11, 11', 11", 11"') des Fahrzeugs (10);
**dadurch gekennzeichnet, dass** das Verfahren weiter umfasst:
- Abgeben von Inertialdaten von einem Inertialssensor des mobilen Endgeräts (20);
- Bestimmen einer Lage und einer Ausrichtung des mobilen Endgeräts (20) auf Basis der Inertialdaten;
- Bestimmen der relativen Position des mobilen Endgerätes (20) auf Basis der zweiten Bilddaten (19) und der Lage und Ausrichtung des mobilen Endgeräts (20).

8. Verfahren nach Anspruch 7, **dadurch gekennzeichnet, dass** die Informationen (25) eine Richtung und eine Distanz relativ zu dem mobilen Endgerät (20) umfassen.

9. Verfahren nach einem der Ansprüche 7 oder 8, **dadurch gekennzeichnet, dass** die Informationen (25) die absolute Position der Parklücke (2) umfassen.

10. Verfahren nach einem der Ansprüche 7 bis 9, **dadurch gekennzeichnet, dass** das Verfahren weiter umfasst:
- Bestimmen einer relativen Position des Fahrzeugs (10) zu dem mobilen Endgerät (20) und/oder einer Ausrichtung des Fahrzeugs (10) relativ zu dem mobilen Endgerät (20) auf Basis der ersten Bilddaten (24), wobei die relative Position und/oder die relative Ausrichtung des Fahrzeugs (10) Teil Informationen (25) sind.

11. Computerlesbares Speichermedium, das Instruktionen enthält, die einen Prozessor dazu veranlassen, ein Verfahren nach einem der Ansprüche 7 bis 10 zu implementieren, wenn die Instruktionen von dem Prozessor ausgeführt werden.

## Claims

1. System (1) for parking a vehicle (10), in particular a motor car, comprising:
- a mobile terminal (20), in particular a smart device, in particular a smartphone, a smartglass or a smartwatch, comprising:
o at least one first image capture device (21) for capturing first image data (24);
∘ a first computation unit (22) that is configured:
• to receive the first image data (24) from the first image capture device (21);
• to take the first image data (24) as a basis for generating information (25) indicating a parking position (2);
∘ a transmission device (23) for transmitting the information (25);
- the vehicle (10), comprising:
∘ a reception device (14) that is configured to receive the information (25);
∘ a second computation unit (15) that is configured to take the information (25) as a basis for determining a parking strategy (16),
∘ a second image capture device (18) for capturing second image data (19);
∘ a parking apparatus (13) that is configured to take into consideration the parking strategy (16) to park the vehicle (10) at the parking position (2),
**characterized in that**
the mobile terminal (20) comprises an inertial sensor (26) for delivering inertial data (27), and the first computation unit (22) is configured to take the inertial data (27) as a basis for determining the orientation and alignment of the mobile terminal (20), and wherein the second computation unit (15) is configured to take the second image data (19) and the orientation and alignment of the mobile terminal (20) as a basis for determining a relative position of the mobile terminal (20) in relation to the vehicle (10).

2. System according to one of the preceding claims, **characterized in that**
the information (25) comprises a direction and a distance of the parking position (2) relative to the mobile terminal (20).

3. System according to either of the preceding claims, **characterized in that** the first computation unit (22) is configured to determine a relative position and/or alignment of the vehicle (10) in relation to the mobile terminal (20) on the basis of the first image data (24).

4. System according to one of the preceding claims, **characterized in that**
the first computation unit (22), the second computation unit (15) and/or a third computation unit of a server is configured to take the information (25) as a basis for discerning a parking space for the vehicle (10).

5. System according to one of the preceding claims, **characterized in that**
the mobile terminal (20) is configured to take vehicle data and the information (25) as a basis for providing a simulation of the parking process.

6. System according to one of the preceding claims, **characterized in that**
the information (25) comprises the absolute position of the parking space (2).

7. Method for parking a vehicle (10), comprising:
- capturing first image data (24) on a first image capture device (21) of a mobile terminal (20);
- discerning a parking position (2) on the basis of the first image data (24);
- transmitting information (25) indicating a parking position to a vehicle (10);
- determining a parking strategy (16) on the basis of the information (25);
- parking the vehicle (10) at the parking position (2) using the parking strategy (16),
- capturing second image data (19) on at least one second image capture device (11, 11', 11'', 11''') of the vehicle (10);
**characterized in that** the method further comprises:
- delivering inertial data from an inertial sensor of the mobile terminal (20);
- determining an orientation and an alignment of the mobile terminal (20) on the basis of the inertial data;
- determining the relative position of the mobile terminal (20) on the basis of the second image data (19) and the orientation and alignment of the mobile terminal (20).

8. Method according to Claim 7, **characterized in that** the information (25) comprises a direction and a distance relative to the mobile terminal (20).

9. Method according to either of Claims 7 and 8, **characterized in that** the information (25) comprises the absolute position of the parking space (2).

10. Method according to one of Claims 7 to 9, **characterized in that** the method further comprises:
- determining a relative position of the vehicle (10) in relation to the mobile terminal (20) and/or an alignment of the vehicle (10) relative to the mobile terminal (20) on the basis of the first image data (24), wherein the relative position and/or the relative alignment of the vehicle (10) are partial information (25).

11. Computer-readable storage medium that contains instructions that prompt a processor to implement a method according to one of Claims 7 to 10 when the instructions are executed by the processor.

## Revendications

1. Système (1) de stationnement d'un véhicule (10), en particulier d'un véhicule de tourisme, le système comprenant :
- un terminal mobile (20), en particulier un dispositif intelligent, notamment un Smartphone, des lunettes intelligentes ou une montre intelligente, comprenant :
∘ au moins un premier moyen d'acquisition d'image (21) destiné à acquérir des premières données d'image (24) ;
∘ une première unité de calcul (22) qui est conçue pour :
▪ recevoir les premières données d'image (24) du premier moyen d'acquisition d'image (21);
▪ générer des informations (25), indiquant une position de stationnement (2), sur la base des premières données d'image (24) ;
∘ un moyen de transmission (23) destiné à transmettre les informations (25) ;
- le véhicule (10) comprenant :
∘ un moyen de réception (14) qui est conçu pour recevoir les informations (25) ;
∘ une deuxième unité de calcul (15) qui est conçue pour déterminer une stratégie de stationnement (16) sur la base des informations (25),
∘ un deuxième moyen d'acquisition d'image (18) destiné à acquérir des deuxièmes données d'image (19);
∘ un dispositif de stationnement (13) qui est conçu pour stationner le véhicule (10) à la position de stationnement (2), en tenant compte de la stratégie de stationnement (16),
**caractérisé en ce que**
le terminal mobile (20) comprend un capteur inertiel (26) destiné à délivrer en sortie des données inertielles (27), et la première unité de calcul (22) est conçue pour déterminer l'emplacement et l'orientation du terminal mobile (20) sur la base des données inertielles (27), et la deuxième unité de calcul (15) étant conçue pour déterminer une position relative du terminal mobile (20) par rapport au véhicule (10) sur la base des deuxièmes données d'image (19) et de l'emplacement et l'orientation du terminal mobile (20).

2. Système selon l'une des revendications précédentes, **caractérisé en ce que**
les informations (25) comprennent une direction et une distance de la position de stationnement (2) par rapport au terminal mobile (20).

3. Système selon l'une des revendications précédentes, **caractérisé en ce que** la première unité de calcul (22) est conçue pour déterminer une position relative et/ou une orientation du véhicule (10) par rapport au terminal mobile (20) sur la base des premières données d'image (24).

4. Système selon l'une des revendications précédentes, **caractérisé en ce que**
la première unité de calcul (22), la deuxième unité de calcul (15) et/ou une troisième unité de calcul d'un serveur sont conçues pour reconnaître une place de stationnement libre pour le véhicule (10) sur la base des informations (25).

5. Système selon l'une des revendications précédentes, **caractérisé en ce que**
le terminal mobile (20) est conçu pour fournir une simulation du processus de stationnement sur la base de données de véhicule et des informations (25).

6. Système selon l'une des revendications précédentes, **caractérisé en ce que**
les informations (25) comprennent la position absolue de la place de stationnement libre (2).

7. Procédé de stationnement d'un véhicule (10), le procédé comprenant les étapes suivantes :
- acquérir des premières données d'image (24) à l'aide d'un premier moyen d'acquisition d'image (21) d'un terminal mobile (20) ;
- détecter une position de stationnement (2) sur la base des premières données d'image (24) ;
- transmettre des informations (25), indiquant une position de stationnement, à un véhicule (10) ;
- déterminer une stratégie de stationnement (16) sur la base des informations (25) ;
- stationner le véhicule (10) à l'aide de la stratégie de stationnement (16) à la position de stationnement (2),
- acquérir des deuxièmes données d'image (19) à l'aide de l'au moins un deuxième moyen d'acquisition d'image (11, 11', 11'', 11''') du véhicule (10); **caractérisé en ce que** le procédé comprend en outre les étapes suivantes :
- délivrer en sortie des données inertielles provenant d'un capteur inertiel du terminal mobile (20);
- déterminer un emplacement et une orientation du terminal mobile (20) sur la base des données inertielles;
- déterminer la position relative du terminal mobile (20) sur la base des deuxièmes données d'image (19) et de l'emplacement et de l'orientation du terminal mobile (20).

8. Procédé selon la revendication 7, **caractérisé en ce que** les informations (25) comprennent une direction et une distance par rapport au terminal mobile (20).

9. Procédé selon l'une des revendications 7 et 8, **caractérisé en ce que** les informations (25) comprennent la position absolue de la place de stationnement libre (2) .

10. Procédé selon l'une des revendications 7 à 9, **caractérisé en ce que** le procédé comprend en outre les étapes suivantes :
- déterminer une position relative du véhicule (10) par rapport au terminal mobile (20) et/ou une orientation du véhicule (10) par rapport au terminal mobile (20) sur la base des premières données d'image (24), la position relative et/ou l'orientation relative du véhicule (10) faisant partie des informations (25).

11. Support de stockage lisible par ordinateur contenant des instructions qui ordonnent à un processeur de mettre en œuvre un procédé selon l'une des revendications 7 à 10 lorsque les instructions sont exécutées par le processeur.
